# FASCICULE DE BREVET EUROPEEN

(11) **EP 1 649 692 B1**
(45) Date de publication et mention de la délivrance du brevet: **25.10.2006**
(21) Numéro de dépôt: 04767755.4
(22) Date de dépôt: 22.07.2004
(51) Int. Cl.: H04N 7/14

(54) **SYSTEME DE PRISE DE VUE ET DE PROJECTION, UTILISANT UN ECRAN PARTAGE EN REGIONS RETRODIFFUSANTES ET TRANSPARENTES ALTERNEES SUR UNE BASE TEMPORELLE.**
BILDAUFZEICHNUNGS- UND PROJEKTIONSSYSTEM MIT EINEM SCHIRM, DER VON TRANSPARENTEN UND RÜCKSTREUREGIONEN GEMEINSAM BENUTZT WIRD, DIE ZEITLICH ALTERNIERT WERDEN
IMAGE-RECORDING AND PROJECTION SYSTEM USING A SCREEN WHICH IS SHARED BY TRANSPARENT AND BACKSCATTERING REGIONS THAT ARE ALTERNATED OVER TIME

(30) Priorité: 28.07.2003 FR 0309246
(43) Date de publication de la demande: 26.04.2006
(73) Titulaire: FRANCE TELECOM, 75015 Paris (FR)
(72) Inventeur: ROBIN-CHAMPIGNEUL, Yves DI, décedé (FR); BUCHNER, Georges, F-75012 Paris (FR); GACHIGNARD, Olivier, F-92120 Montrouge (FR)
(74) Mandataire: Bentz, Jean-Paul
(86) Numéro de dépôt international: PCT/FR2004/001954
(87) Numéro de publication internationale: WO 2005/022256

(56) Documents cités:
- EP-A- 0 385 128
- FR-A- 2 161 480
- US-A- 5 282 027
- US-A- 5 801 758
- PATENT ABSTRACTS OF JAPAN vol. 014, no. 541 (E-1007), 29 novembre 1990 (1990-11-29) -& JP 02 228893 A (NIPPON TELEGR & TELEPH CORP), 11 septembre 1990 (1990-09-11)
- PATENT ABSTRACTS OF JAPAN vol. 016, no. 326 (E-1235), 16 juillet 1992 (1992-07-16) -& JP 04 096581 A (NIPPON TELEGR & TELEPH CORP <NTT>), 27 mars 1992 (1992-03-27)
- ROSE D A D ET AL: "A REVIEW OF EYE-TO-EYE VIDEOCONFERENCING TECHNIQUES" BT TECHNOLOGY JOURNAL, BT LABORATORIES, GB, vol. 13, no. 4, 1 octobre 1995 (1995-10-01), pages 127-131, XP000538887 ISSN: 1358-3948

## Description

L'invention concerne, de façon générale, les techniques d'éclairage et de prise de vues.

Plus précisément, l'invention concerne une installation de prise de vue pour un système de communication interpersonnelle, comprenant un écran partageant l'espace en deux demi-espaces, une zone d'observation, une caméra, un premier trajet spatial pour un premier flux lumineux se propageant au moins de l'écran vers la zone d'observation et permettant de recevoir, dans la zone d'observation, des images provenant de l'écran, et un deuxième trajet spatial pour un deuxième flux lumineux se propageant au moins de la zone d'observation vers la caméra, et permettant de former une image de la zone d'observation au moyen d'un capteur de la caméra placé dans un état actif, les premier et deuxième flux lumineux traversant au moins partiellement une surface commune de l'espace, la zone d'observation étant disposée dans le premier demi-espace, la caméra étant disposée dans le deuxième demi-espace, et ladite surface commune étant partagée sur une base temporelle entre les premier et deuxième flux lumineux.

Une installation de ce type est par exemple décrite dans les documents de brevets JP 02 228893, EP 0 385 128, et US 5 282 027.

Dans les systèmes audiovisuels de communication interpersonnelle, tels que la visioconférence ou le visiophone, les utilisateurs sont à la fois l'objet d'une prise de vue au moyen d'une caméra, et les observateurs d'un écran sur lequel s'affiche l'image de leurs correspondants distants.

Dans certains systèmes, la caméra est placée à côté ou au-dessus de l'écran.

Un tel angle de prise de vue conduit à une vue de biais ou plongeante qui n'est pas naturelle. En outre, comme les utilisateurs regardent l'écran et non pas la caméra, leurs correspondants ont l'impression qu'ils ne regardent pas leur visage comme ils le feraient dans une conversation normale face à face.

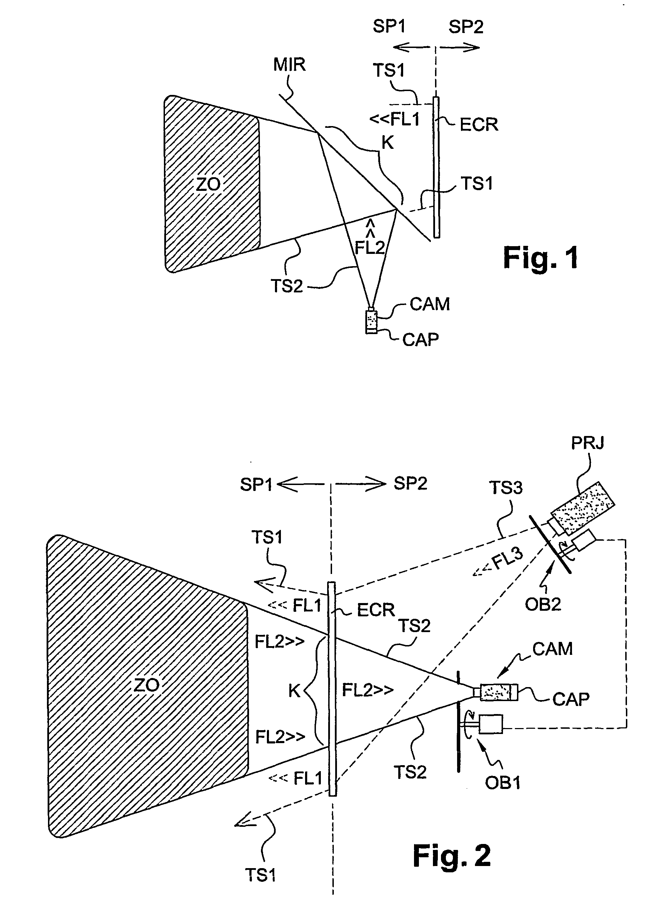

Pour remédier à cet inconvénient, il est connu d'utiliser, selon un montage illustré à la figure 1, un miroir MIR partiellement transparent placé obliquement devant l'écran ECR et renvoyant vers la caméra CAM l'image des observateurs placés dans la zone d'observation ZO. La position virtuelle de la caméra CAM peut ainsi être placée au milieu de l'écran ECR ou derrière lui, là où s'affiche le visage d'un correspondant distant.

Ce système présente cependant plusieurs inconvénients, et notamment ceux que constituent le fait que l'encombrement du miroir oblique MIR accroît les dimensions et le poids du terminal, et impose une distance minimale entre les observateurs et l'écran ECR, le fait que la zone qui se trouve derrière le miroir par rapport à la caméra, au-dessus du miroir MIR sur la figure 1, est dans le champ de la caméra à travers le miroir et son image vient se superposer à l'image des utilisateurs, risquant d'y introduire des artéfacts gênants, et le fait que des reflets sur le miroir MIR peuvent se superposer à l'image affichée sur l'écran ECR et gêner les observateurs placés dans la zone d'observation ZO.

D'autres modes de réalisation, décrits en référence aux figures 2 à 4 et notamment connus du brevet US 5 282 027, requièrent une synchronisation parfaite de la prise de vue et de la projection d'images.

Dans ce contexte, l'invention a pour but de permettre de placer librement une caméra CAM derrière l'écran ECR tout en se libérant des inconvénients et des contraintes mentionnés ci-dessus. L'encombrement du terminal est alors réduit et les utilisateurs peuvent sans aucun inconvénient s'approcher de l'écran, ce qui est particulièrement intéressant pour augmenter l'impression d'immersion dans le cas d'un affichage sur un grand écran.

A cette fin, l'installation de l'invention, par ailleurs conforme à la définition générique qu'en donne le préambule ci-dessus, est essentiellement caractérisée en ce qu'elle comprend un projecteur disposé dans le premier demi-espace et émettant un troisième flux lumineux en direction de l'écran, en ce que l'écran est partagé en des première et deuxième fractions de surface complémentaires l'une de l'autre et respectivement allouées à la rétrodiffusion du troisième flux lumineux et à la transmission du deuxième flux lumineux, en ce que le premier flux lumineux est formé par rétrodiffusion du troisième flux lumineux sur la première fraction de surface de l'écran, en ce que la caméra est disposée en dehors du trajet spatial de propagation du troisième flux lumineux à travers la deuxième fraction de surface, et en ce que chacune des première et deuxième fractions de surface se modifie dans le temps de telle sorte que chaque portion de l'écran soit alternativement transparente et rétro-diffusante.

Par ailleurs, chacune des première et deuxième fractions de surface adopte de préférence, par rapport à la surface commune, une position en permanence variable au cours du temps.

L'écran peut être réalisé de façon mécanique, auquel cas il prend par exemple la forme d'un moulinet formé d'ailettes radiales coplanaires constituant collectivement la première fraction de surface et séparées les unes des autres par des interstices constituant collectivement la deuxième fraction de surface.

Il est cependant également possible de prévoir que l'écran soit un écran à commande électrique.

D'autres caractéristiques et avantages de l'invention ressortiront clairement de la description qui en est faite ci-après, à titre indicatif et nullement limitatif, en référence aux dessins annexés, dans lesquels :
- la figure 1 est un schéma illustrant une installation de l'art antérieur;
- la figure 2 est un schéma illustrant un autre type d'installation connue;
- la figure 3 est un diagramme temporel illustrant de façon symbolique le partage, entre les premier et second flux lumineux, de la surface commune à ces deux flux dans une installation telle que celle de la figure 2;
- la figure 4 est un diagramme temporel illustrant l'évolution d'un signal de commande utilisé pour partager, entre les premier et second flux lumineux, la surface commune à ces deux flux dans une installation telle que celle de la figure 2; et
- la figure 5 est un schéma illustrant une installation conforme à l'invention.

Comme indiqué précédemment, l'invention concerne une installation de prise de vue pour un système de communication interpersonnelle, en particulier pour un système de communication audiovisuelle entre deux sites distants, offrant des fonctions de visioconférence ou de mur de téléprésence.

Traditionnellement, une telle installation, dont la forme la plus connue est illustrée à la figure 1, comprend notamment un écran ECR, une zone d'observation ZO, et une caméra CAM, l'écran ECR partageant l'espace en deux demi-espaces SP1 et SP2, et la zone d'observation étant occupée par des utilisateurs filmés par la caméra CAM alors qu'ils observent l'écran ECR.

En fonctionnement, cette installation fait donc tout d'abord apparaître un premier flux lumineux FL1 qui se propage, suivant un premier trajet spatial TS1, au moins de l'écran ECR vers la zone d'observation ZO et qui permet de recevoir, dans la zone d'observation ZO, des images provenant de l'écran ECR.

Cette installation fait également apparaître un second flux lumineux FL2 qui se propage, suivant un second trajet spatial TS2, au moins de la zone d'observation ZO vers la caméra CAM, et qui permet de former, au moyen d'un capteur CAP de la caméra CAM placé dans un état actif, une image de la zone d'observation ZO.

Comme le montre la figure 1, les premier et deuxième flux lumineux FL1 et FL2 traversent au moins partiellement une surface commune K de l'espace, cette surface se matérialisant notamment sur le miroir MIR dans le cas des installations connues et obligeant ce miroir à être semi-transparent pour pouvoir à la fois assurer la transmission du premier flux lumineux FL1 et la rétrodiffusion du deuxième flux lumineux FL2.

Dans un autre type d'installation connue, illustrée aux figures 2 à 4, la zone d'observation ZO et la caméra CAM sont disposées de part et d'autre de l'écran ECR, par exemple respectivement dans les premier et second demi-espaces SP1 et SP2, et la surface commune K est partagée sur une base temporelle entre les premier et deuxième flux lumineux FL1 et FL2.

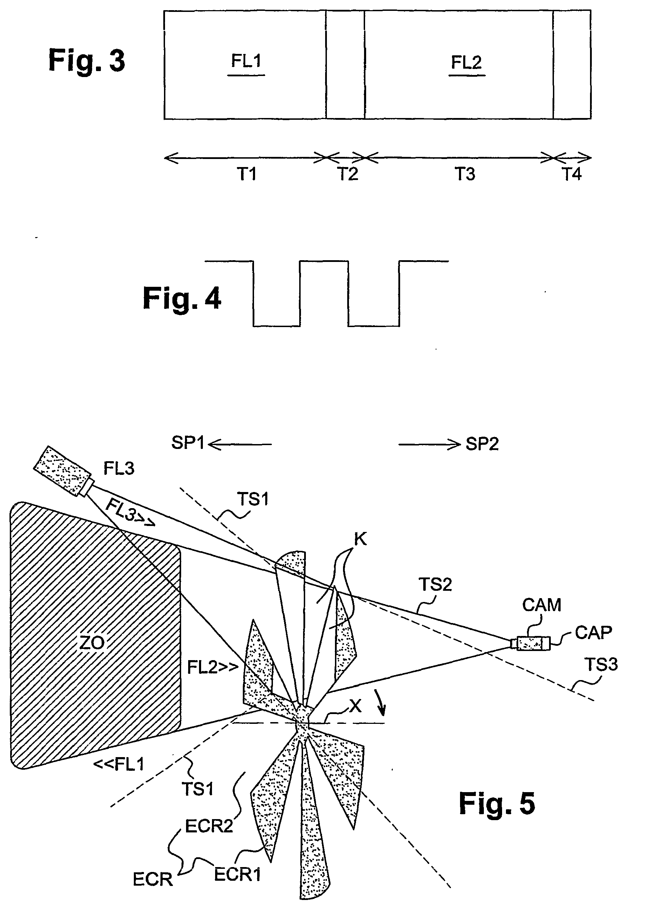

Comme le montre la figure 3, qui se rapporte au mode de réalisation de la figure 2, la surface commune K peut être alternativement allouée, pendant des intervalles de temps respectifs disjoints, tels que T1 et T3, à la propagation du premier flux lumineux FL1 et à la propagation du deuxième flux lumineux FL2, les intervalles de temps T2 et T4 étant des intervalles de temps de transition, alloués au passage de l'état adopté pendant l'intervalle T1 à l'état adopté pendant l'intervalle T3, ou l'inverse.

En pratique, la surface commune K est définie sur l'écran ECR et l'écran ECR est alternativement alloué à la propagation du premier flux lumineux FL1 et à la propagation du deuxième flux lumineux FL2 pendant les intervalles de temps respectifs disjoints T1 et T3.

Pour ce faire, les installations de ce type utilisent un écran qui peut être commuté rapidement au moyen d'un signal électrique entre deux états, à savoir entre un état actif, dans lequel une image est visible sur cet écran ECR pour les observateurs placés dans la zone ZO, et un état passif, dans lequel cet écran ECR est transparent et permet à la caméra CAM placée dans le second demi-espace SP2 de capter l'image des utilisateurs placés dans le premier demi-espace SP1.

La commutation de l'écran ECR entre ses deux états se fait à un rythme suffisamment rapide pour que les observateurs placé dans la zone d'observation ZO n'aient pas le temps de se rendre compte des interruptions et qu'ils aient ainsi l'impression d'un affichage continu de l'image sur l'écran ECR. Typiquement, la fréquence de répétition du cycle est celle de la télévision ou d'autres images vidéo, c'est-à-dire par exemple de l'ordre de 50 à 100 Hz.

Plusieurs types connus d'écrans peuvent être utilisés pour remplir la fonction précédemment décrite.

Tout d'abord, il est possible d'utiliser un écran constitué d'une dalle de verre comportant une couche de cristal liquide entre deux électrodes transparentes, ce type d'écran étant aujourd'hui utilisé dans l'aménagement de locaux pour créer des séparations et pouvant à volonté adopter, par application d'une tension électrique, un premier état dans lequel cet écran est opaque ou un second état dans lequel il est transparent.

Dans ce cas, l'écran ECR fonctionne par rétrodiffusion lorsqu'il est opaque.

Les images peuvent donc être envoyées sur cet écran au moyen d'un projecteur PRJ, placé dans le premier espace SP1 suivant une disposition identique à celle qui sera plus précisément décrite en référence à la figure 5 qui illustre l'invention, le premier flux lumineux FL1 étant alors formé par rétrodiffusion sur l'écran ECR d'un troisième flux lumineux FL3 émis par ce projecteur PRJ.

La figure 2 illustre une installation utilisant un écran ECR appartenant à un autre type et qui, par application d'un champ électrique, adopte sélectivement un premier état dans lequel cet écran diffuse la lumière ou un second état dans lequel il est transparent.

Dans ce cas, le projecteur ou vidéo projecteur PRJ peut être disposé dans le second demi-espace SP2 et projeter une image sur l'écran pendant la phase T1 de diffusion de l'écran, tandis que la caméra reçoit l'image de la zone d'observation ZO pendant la phase T3 de transparence de l'écran.

Le premier flux lumineux FL1 grâce auquel l'image projetée sur l'écran est visible dans la zone ZO est alors formé par diffusion, par l'écran ECR, du troisième flux lumineux FL3 émis par ce projecteur PRJ.

On peut prévoir que, pendant la phase T3 de transparence de l'écran ECR, le projecteur PRJ envoie une image complètement noire, ou bien que ce projecteur éclaire en biais à travers l'écran ECR une zone qui intercepte ou absorbe la lumière sans gêner les utilisateurs placés dans la zone ZO, ou bien encore, comme illustré à la figure 2, qu'un obturateur OB2, synchronisé avec la commande de l'écran ECR, arrête le troisième flux lumineux FL3 émis par le projecteur PRJ.

La figure 4 montre un cycle de commutation possible pour un tel écran.

Lors de l'état « haut » du champ électrique, l'écran est dans son premier état, c'est-à-dire diffusant. Pendant cette phase, la caméra CAM ne filme rien, ce résultat pouvant être obtenu soit en plaçant le capteur CAP de cette caméra dans un état passif, soit en utilisant un obturateur OB1 qui interrompt la transmission du deuxième flux lumineux FL2 vers la caméra CAM en synchronisme avec le premier état de l'écran ECR. Pendant cette même phase, le projecteur PRJ affiche à l'écran ECR l'image souhaitée.

Lors de l'état « bas » du champ électrique, l'écran ECR est dans son deuxième état, c'est-à-dire transparent. La caméra filme la scène présente dans la zone ZO, et le vidéo projecteur PRJ n'émet aucune image, le troisième flux lumineux FL3 étant par exemple interrompu par l'obturateur OB2.

En variante, il est également possible d'utiliser un écran ECR lumineux qui, dans son premier état, constitue lui-même une source de lumière et qui produit alors lui-même directement le premier flux lumineux FL1, comme c'est par exemple le cas d'un écran à plasma.

Pour éviter toute dérive dans la synchronisation, il est cependant nécessaire, dans tous les cas précédemment évoqués, d'asservir sur une horloge commune la commande de l'écran ECR, celle de l'obturateur OB2, et celle du capteur CAP ou celle de l'obturateur OB1.

En effet, dans tous ces l'écran ECR adopte alternativement un premier état dans lequel il émet le premier flux lumineux FL1 dans le premier demi-espace SP1, que ce soit directement dans le cas d'un écran lumineux, ou par rétrodiffusion, ou encore par diffusion, et un deuxième état dans lequel il est transparent.

Et dans chacun de ces cas, le capteur CAP de la caméra CAM reçoit, dans son état actif, le deuxième flux lumineux FL2 en synchronisme avec le deuxième état de l'écran ECR.

En outre, le troisième flux lumineux FL3 émis par le projecteur PRJ dans le cas où l'écran n'est pas lui-même lumineux est atténué ou interrompu en direction de la zone d'observation ZO en synchronisme avec le deuxième état de l'écran ECR.

En effet, le capteur CAP de la caméra CAM accumule en général des charges électriques générées par la lumière reçue pendant une certaine durée, puis les transfère rapidement vers les circuits d'amplification et de traitement de la caméra. Dans le fonctionnement normal de la caméra, l'accumulation a lieu pendant la plus grande partie du cycle. Il faut donc éviter que l'écran ECR n'émette ou ne diffuse de la lumière dans le second demi-espace SP2 en direction de la caméra. Pour ce faire, il faut donc protéger la caméra de cette lumière, soit au moyen de l'obturateur OB1 qui intercepte la lumière pendant la phase active T1 de l'écran, soit en synchronisant la caméra CAM et l'écran ECR de telle sorte que, pendant une trame sur deux, la période d'accumulation des charges électriques par le capteur CAP de la caméra coïncide avec la phase T3 de transparence de l'écran, l'autre trame n'étant pas utilisée.

Le cycle peut être appliqué simultanément à l'ensemble de l'écran ECR ou successivement à différentes plages de l'écran. Dans ce dernier cas, si l'écran émet ou diffuse de la lumière vers l'arrière en direction de la caméra, il faudrait pouvoir synchroniser les différentes plages de l'écran avec les plages correspondantes de la caméra, ce qui n'est habituellement pas possible et en outre exigerait un alignement délicat de la caméra. A défaut, on peut doubler l'écran d'affichage d'un second écran placé derrière et permettant d'en occulter les différentes plages pendant leur phase d'activité.

Le partage du temps entre l'écran et la caméra réduit la lumière émise par l'écran et la lumière reçue par la caméra. Il faut donc augmenter en compensation la luminance de l'écran et la sensibilité de la caméra. Mais cet inconvénient est exactement le même dans les autres procédés utilisés tels que le miroir partiellement transparent.

Pendant la phase de transparence de l'écran ECR, ce qui est placé dans le second demi-espace, et notamment la caméra CAM, peut être visible par les utilisateurs placés dans la zone d'observation ZO. Il faut donc que le second demi-espace soit le moins éclairé possible, et de préférence que tous les objets qui s'y trouvent soient noirs pour diffuser le moins possible de lumière. Pour certaines applications, il peut au contraire être utile que certains objets soient visibles à travers l'écran et dans ce cas ils seront au contraire éclairés sélectivement. Il peut s'agir également d'un écran sur lequel vient s'afficher une image ou du texte qui vient se superposer à l'image principale.

Le montage de la figure 2 pourrait être modifié pour constituer une variante dans laquelle le projecteur PRJ serait disposé dans le premier demi-espace SP1, dans laquelle l'écran ECR serait commandé par un signal électrique pour être alternativement transparent et rétrodiffusant, et dans laquelle les obturateurs OB1 et OB2 deviendraient optionnels, au moins pour autant que le projecteur PRJ n'éclaire pas la caméra CAM pendant la période de transparence de l'écran ECR.

Dans ce cas, le premier flux lumineux FL1 émis par l'écran ECR dans le premier demi-espace SP1 serait donc obtenu par rétrodiffusion du troisième flux lumineux FL3 émis par le projecteur PRJ en direction de l'écran ECR.

Au cas où l'écran ECR diffuserait de la lumière vers la caméra CAM pendant sa période de rétrodiffusion, il conviendrait de protéger la caméra CAM ou de rejeter l'image qu'elle enregistrerait pendant cette période.

La figure 5 illustre la mise en oeuvre de l'invention, qui permet de s'affranchir des besoins de synchronisation.

Comme dans le cas de l'installation de la figure 2, la zone d'observation ZO et la caméra CAM sont disposées de part et d'autre de l'écran ECR, par exemple respectivement dans les premier et second demi-espaces SP1 et SP2, et la surface commune K est partagée sur une base temporelle entre les premier et deuxième flux lumineux FL1 et FL2.

Par ailleurs, l'installation de l'invention comprend également un projecteur PRJ disposé dans le premier demi-espace SP1 et émettant un troisième flux lumineux FL3 en direction de l'écran ECR.

L'écran ECR est partagé en deux fractions de surface complémentaires l'une de l'autre, ECR1 et ECR2, respectivement allouées à la rétrodiffusion du troisième flux lumineux FL3 et à la transmission du deuxième flux lumineux FL2.

Cependant, ces deux fractions de surface se modifient dans le temps de telle sorte que chaque portion de l'écran soit alternativement transparente et rétrodiffusante.

La réalisation de ce système serait de préférence un écran à commande électrique, mais une réalisation mécanique est aussi possible et permet de bien illustrer le processus.

Par exemple, comme le montre la figure 5, l'écran ECR peut prendre la forme d'un moulinet formé d'ailettes radiales coplanaires constituant collectivement la première fraction de surface ECR1, et séparées les unes des autres par des interstices constituant collectivement la deuxième fraction de surface ECR.

Dans ces conditions, le premier flux lumineux FL1 est formé par rétrodiffusion du troisième flux lumineux FL3 sur la première fraction de surface ECR1 de l'écran ECR, c'est-à-dire sur les ailettes.

La caméra CAM est disposée en dehors du trajet spatial de propagation SP3 du troisième flux lumineux FL3 à travers la deuxième fraction de surface ECR2 de l'écran ECR, de manière à ne pas recevoir les images issues du projecteur PRJ.

Enfin, chacune des fractions de surface ECR1 et ECR2 adopte, par rapport à la surface K commune aux flux lumineux FL1 et FL2, une position en permanence variable au cours du temps, cette position variable étant en l'occurrence obtenue par rotation du moulinet ainsi constitué autour d'un axe X, externe à la surface commune K.

## Revendications

1. Installation de prise de vue pour un système de communication interpersonnelle, comprenant un écran (ECR) partageant l'espace en deux demi-espaces (SP1, SP2), une zone d'observation (ZO), une caméra (CAM), un premier trajet spatial (TS1) pour un premier flux lumineux (FL1) se propageant au moins de l'écran (ECR) vers la zone d'observation (ZO) et permettant de recevoir, dans la zone d'observation (ZO), des images provenant de l'écran (ECR), et un deuxième trajet spatial (TS2) pour un deuxième flux lumineux (FL2) se propageant au moins de la zone d'observation (ZO) vers la caméra (CAM), et permettant de former une image de la zone d'observation (ZO) au moyen d'un capteur (CAP) de la caméra (CAM) placé dans un état actif, les premier et deuxième flux lumineux (FL1, FL2) traversant au moins partiellement une surface commune (K) de l'espace, la zone d'observation (ZO) étant disposée dans le premier demi-espace (SP1), la caméra (CAM) étant disposée dans le deuxième demi-espace (SP2), et ladite surface commune (K) étant partagée sur une base temporelle entre les premier et deuxième flux lumineux (FL1, FL2), **caractérisée en ce qu'**elle comprend un projecteur (PRJ) disposé dans le premier demi-espace (SP1) et émettant un troisième flux lumineux (FL3) en direction de l'écran (ECR), **en ce que** l'écran (ECR) est partagé en des première et deuxième fractions de surface (ECR1, ECR2) complémentaires l'une de l'autre et respectivement allouées à la rétrodiffusion du troisième flux lumineux (FL3) et à la transmission du deuxième flux lumineux (FL2), **en ce que** le premier flux lumineux (FL1) est formé par rétrodiffusion du troisième flux lumineux (FL3) sur la première fraction de surface (ECR1) de l'écran (ECR), **en ce que** la caméra (CAM) est disposée en dehors du trajet spatial de propagation (SP3) du troisième flux lumineux (FL3) à travers la deuxième fraction de surface (ECR2), et **en ce que** chacune des première et deuxième fractions de surface (ECR1, ECR2) se modifie dans le temps de telle sorte que chaque portion de l'écran soit alternativement transparente et rétro-diffusante.

2. Installation suivant la revendication 1, **caractérisée en ce que** chacune des première et deuxième fractions de surface (ECR1, ECR2) adopte, par rapport à la surface commune (K), une position en permanence variable au cours du temps.

3. Installation suivant la revendication 2, **caractérisée en ce que** l'écran (ECR) est réalisé de façon mécanique.

4. Installation suivant la revendication 3, **caractérisée en ce que** l'écran (ECR) prend la forme d'un moulinet formé d'ailettes radiales coplanaires constituant collectivement la première fraction de surface (ECR1) et séparées les unes des autres par des interstices constituant collectivement la deuxième fraction de surface (ECR2).

5. Installation suivant l'une quelconque des revendications 1 et 2, **caractérisée en ce que** l'écran (ECR) est à commande électrique.

## Claims

1. Image-recording installation for an interpersonal communication system, comprising a screen (ECR) splitting the space into two half-spaces (SP1, SP2), an observation zone (ZO), a camera (CAM), a first spatial path (TS1) for a first luminous flux (FL1) propagating at least from the screen (ECR) to the observation zone (ZO) and making it possible to receive, in the observation zone (ZO), pictures originating from the screen (ECR), and a second spatial path (TS2) for a second luminous flux (FL2) propagating at least from the observation zone (ZO) to the camera (CAM), and making it possible to form a picture of the observation zone (ZO) by means of a sensor (CAP) of the camera (CAM) which is placed in an active state, the first and second luminous fluxes (FL1, FL2) passing at least partially through a common surface (K) of the space, the observation zone (ZO) being disposed in the first half-space (SP1), the camera (CAM) being disposed in the second half-space (SP2), and the said common surface (K) being split on a time basis between the first and second luminous fluxes (FL1, FL2), **characterized in that** it comprises a projector (PRJ) disposed in the first half-space (SP1) and emitting a third luminous flux (FL3) towards the screen (ECR), **in that** the screen (ECR) is split into first and second complementary surface fractions (ECR1, ECR2) respectively allocated to the back-scattering of the third luminous flux (FL3) and to the transmission of the second luminous flux (FL2), **in that** the first luminous flux (FL1) is formed by back-scattering of the third luminous flux (FL3) on the first surface fraction (ECR1) of the screen (ECR), **in that** the camera (CAM) is disposed off the spatial path of propagation (SP3) of the third luminous flux (FL3) through the second surface fraction (ECR2), and **in that** each of the first and second surface fractions (ECR1, ECR2) is modified over time in such a way that each portion of the screen is alternately transparent and back-scattering.

2. Installation according to Claim 1, **characterized in that** each of the first and second surface fractions (ECR1, ECR2) adopts, with respect to the common surface (K), a position permanently variable over time.

3. Installation according to Claim 2, **characterized in that** the screen (ECR) is mechanically implemented.

4. Installation according to Claim 3, **characterized in that** the screen (ECR) takes the form of a propeller formed of coplanar radial vanes collectively constituting the first surface fraction (ECR1) and separated from one another by interstices collectively constituting the second surface fraction (ECR2).

5. Installation according to any one of Claims 1 and 2, **characterized in that** the screen (ECR) is electrically controlled.

## Patentansprüche

1. Bildaufnahmevorrichtung für ein interpersonelles Kommunikationssystem, mit einem Schirm (ECR), der den Raum in zwei Halbräume (SP1, SP2) unterteilt, einer Beobachtungszone (ZO), einer Kamera (CAM), einer ersten räumlichen Bahn (TS1) für einen ersten Lichtstrom (FL1), der sich wenigstens von dem Schirm (ECR) zu der Beobachtungszone (ZO) ausbreitet und ermöglicht, in der Beobachtungszone (ZO) Bilder zu empfangen, die von dem Schirm (ECR) stammen, und einer zweiten räumlichen Bahn (TS2) für einen zweiten Lichtstrom (FL2), der sich wenigstens von der Beobachtungszone (ZO) zu der Kamera (CAM) ausbreitet und ermöglicht, ein Bild von der Beobachtungszone (ZO) mittels eines in einen aktiven Zustand versetzten Aufnehmers (CAP) der Kamera (CAM) zu erzeugen, wobei der erste und der zweite Lichtstrom (FL1, FL2) wenigstens teilweise eine gemeinsame Fläche (K) des Raums durchlaufen, wobei die Beobachtungszone (ZO) in dem ersten Halbraum (SP1) angeordnet ist, die Kamera (CAM) in dem zweiten Halbraum (SP2) angeordnet ist und die gemeinsame Fläche (K) auf einer zeitlichen Basis zwischen dem ersten und dem zweiten Lichtstrom (FL1, FL2) unterteilt ist, **dadurch gekennzeichnet, dass** sie einen Projektor (PRJ) umfasst, der in dem ersten Halbraum (SP1) angeordnet ist und einen dritten Lichtstrom (FL3) in Richtung des Schirms (ECR) aussendet, dass der Schirm (ECR) in einen ersten und in einen zweiten Flächenanteil (ECR1, ECR2) unterteilt ist, die zueinander komplementär sind und für die Rückstreuung des dritten Lichtstroms (FL3) bzw. für die Übertragung des zweiten Lichtstroms (FL2) vorgesehen sind, dass der erste Lichtstrom (FL1) durch Rückstreuung des dritten Lichtstroms (FL3) an dem ersten Flächenanteil (ECR1) des Schirms (ECR) erzeugt wird, dass die Kamera (CAM) außerhalb der räumlichen Ausbreitungsbahn (SP3) des dritten Lichtstroms (FL3) durch den zweiten Flächenanteil (ECR2) angeordnet ist und dass sich der erste und der zweite Flächenanteil (ECR1, ECR2) zeitlich verändern, derart, dass jeder Abschnitt des Schirms abwechselnd lichtdurchlässig und rückstreuend ist.

2. Vorrichtung nach Anspruch 1, **dadurch gekennzeichnet, dass** sowohl der erste als auch der zweite Flächenanteil (ECR1, ECR2) in Bezug auf die gemeinsame Fläche (K) eine Position einnimmt, die im Verlauf der Zeit ständig veränderlich ist.

3. Vorrichtung nach Anspruch 2, **dadurch gekennzeichnet, dass** der Schirm (ECR) mechanisch hergestellt ist.

4. Vorrichtung nach Anspruch 3, **dadurch gekennzeichnet, dass** der Schirm (ECR) die Form eines Propellers annimmt, das aus koplanaren radialen Flügeln gebildet ist, die zusammen den ersten Flächenanteil (ECR1) bilden und voneinander durch Zwischenräume getrennt sind, die zusammen den zweiten Flächenanteil (ECR2) bilden.

5. Vorrichtung nach einem der Ansprüche 1 und 2, **dadurch gekennzeichnet, dass** der Schirm (ECR) elektrisch gesteuert wird.
